## Europäisches Patentamt
## European Patent Office
## Office européen des brevets

(19)

(11) Numéro de publication: **0 191 653**
**B1**

(12)

# FASCICULE DE BREVET EUROPEEN

(45) Date de publication du fascicule du brevet:
**26.07.89**

(51) Int. Cl.⁴: **G 01 N 3/30**

(21) Numéro de dépôt: **86400009.6**

(22) Date de dépôt: **03.01.86**

(54) **Appareil de mesure de la résistance au choc.**

(30) Priorité: **14.01.85 FR 8500426**

(43) Date de publication de la demande:
**20.08.86 Bulletin 86/34**

(45) Mention de la délivrance du brevet:
**26.07.89 Bulletin 89/30**

(84) Etats contractants désignés:
**AT BE CH DE FR GB IT LI LU NL SE**

(56) Documents cités:
**DE-B- 1 075 868**
**FR-A- 2 195 343**
**US-A- 4 405 243**

(73) Titulaire: **ATOCHEM, 4 & 8, Cours Michelet La Défense 10, F-92800 Puteaux (FR)**

(72) Inventeur: **Bourdon, Raymond, Domaine du Château Lafitte, F-64360 Moneim (FR)**

(74) Mandataire: **Foiret, Claude et al, ATOCHEM Département Propriété Industrielle, F-92091 Paris la Défense 10 Cédex 42 (FR)**

EP 0 191 653 B1

## Description

La présente invention concerne un appareil de mesure de la résistance au choc et plus particulièrement un système de mise en température des éprouvettes, préalablement à la mesure, adapté sur l'appareil.

De façon simplifiée, les appareils de mesure de résistance au choc, plus particulièrement adaptés pour contrôler les matières plastiques, sont essentiellement constitués d'une enclume, creuse dans l'axe de la chute de la masse, et éventuellement de mors servant à fixer l'éprouvette à l'enclume. Bien entendu sont également additionnés des moyens de mesure et d'enregistrement des résultats qui ne concernent pas directement l'invention.

Dans le cas des mesures à froid, selon l'art antérieur tel que par exemple le US-A-4 405 243, pour refroidir l'éprouvette il est nécessaire de la placer avec l'enclume et les mors de fixation dans une enceinte refroidie. Lorsque l'éprouvette a atteint la température souhaitée l'ensemble est retiré de l'enceinte pour que l'éprouvette soit immédiatement soumise au choc. Un tel système nécessite un appareillage de refroidissement volumineux; de plus la méthode est lente et onéreuse, inconvénients dûs en particulier à la perte de temps pour le refroidissement de l'ensemble de fixation de l'éprouvette et à une perte d'énergie pour ce même refroidissement.

La présente invention consiste en un appareillage permettant de ne refroidir que l'éprouvette. Succinctement, on introduit dans la partie creuse de l'enclume un moyen thermique venant en contact avec l'éprouvette; lorsque cette dernière se trouve à la bonne température, le moyen thermique est retiré tandis que, sensiblement simultanément, grâce à un moyen d'asservissement approprié, une masse en mouvement entre en contact avec l'éprouvette. Compte tenu de la mobilité du moyen thermique, l'appareil n'est pas exclusivement reservé aux mesures de choc à froid.

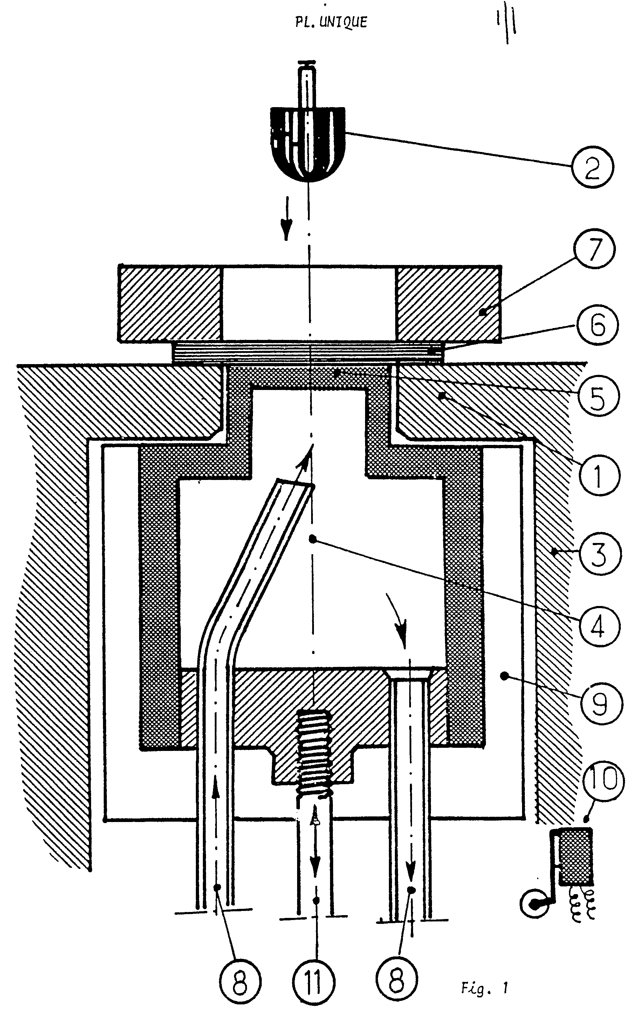

La figure annexée permet d'illustrer la description de l'appareil. L'appareil constitué d'une enclume 1 percée de part en part dans l'axe de la chute d'une masse 2 et de préférence fixée sur un bâti 3 et d'un moyen thermique 4 est caractérisé en ce que le moyen thermique, indépendant de l'enclume et mobile par rapport à elle, possède une partie mâle 5, dont le périmètre correspond de préférence sensiblement à celle de la partie percée de l'enclume tout en laissant libre cette partie mâle dans cette partie femelle de l'enclume, et dont la surface vient au minimum à l'aplomb de la surface de l'enclume pour entrer en contact avec l'éprouvette 6 dans la phase d'échange thermique. Il n'est pas exclu de prévoir des mors 7 permettant d'immobiliser l'éprouvette sur l'enclume. Le moyen thermique 4 est habituellement un réservoir dans lequel, par exemple, circule un liquide par l'intermédiaire des tubes 8, ou contenant un moyen permettant l'échange thermique. Il peut tout simplement être envisagé, dans le cas où on souhaite réchauffer l'éprouvette, de placer une résistance chauffante dans la partie mâle (5). Il peut également, par mesure d'économie, être envisagé decalorifuger 9 le moyen thermique 4.

L'intérêt de l'appareillage se trouve dans la mobilité du moyen thermique 4. Lorsque l'éprouvette se trouve à la température souhaitée on laisse s'échapper le moyen thermique tout en lâchant la masse 2 sur l'éprouvette. Bien entendu la fiabilité de la mesure réside dans l'écart de temps minimum qui doit exister entre la rupture du contact entre l'éprouvette et le moyen thermique, et le moment d'impact de la masse avec l'éprouvette. Un moyen efficace pour limiter au maximum cet écart de temps consiste à asservir la libération de la masse 2 à l'échappement du moyen thermique 4. Ce moyen d'asservissement peut consister à enclancher, par contact du moyen thermique, un système de libération de la masse situé sur le parcours d'échappement dudit moyen thermique.

Un exemple concret, mais non limitatif, peut illustrer l'invention. Il es possible de monter le moyen thermique sur un système hydraulique, tel un vérin. Lors de la libération du piston 11 du vérin, le moyen thermique chute brutalement; sur le parcours de la chute il rencontre le contact 10 qui déclanche la libération de la masse 2. Le contact 10 peut par exemple être un interrupteur commandant un système d'électro-aimant ou encore un système pneumatique.

## Revendications

1. Appareil de mesure de la résistance au choc constitué d'une enclume (1) percée de part en part, dans l'axe de la chute d'une masse (2) et d'un moyen thermique (4) permettant d'amener une éprouvette (6) à une température donnée caractérisé en ce que le moyen thermique, indépendant de l'enclume et mobile par rapport à elle, possède une partie mâle (5) pénétrant dans la partie percée de l'enclume et dont la surface vient au minimum à l'aplomb de la surface de l'enclume.

2. Appareil selon la revendication 1 caractérisé en ce que le périmètre de la partie mâle correspond sensiblement à celui de la partie percée de l'enclume (1), tout en laissant libre cette partie mâle.

3. Appareil selon l'une des revendications 1 à 2, caractérisé en ce que le moyen thermique (4) est un réservoir contenant un moyen permettant l'échange thermique.

4. Appareil selon l'une des revendications 1 à 3 caractérisé en ce que la libération de la masse (2) est asservie à la mobilité du moyen thermique (4).

5. Appareil selon la revendication 4 caractérisé en ce que dans sa mobilité le moyen thermique (3) déclanche un contact (10) qui libère la masse (2).

6. Appareil selon l'une des revendications 4 à 5 caractérisé en ce que l'asservissement est assuré par un système pneumatique.

## Patentansprüche

1. Vorrichtung für die Messung der Schlagfestigkeit bestehend aus einem Amboss (1), der in der Fallachse eines Gewichts (2) durchbrochen ist und aus einer thermischen Einrichtung (4), die es ermöglicht einen Prüfling (6) auf eine vorgegebene Temperatur zu bringen, dadurch gekennzeichnet, dass die thermische Einrichtung vom Amboss unabhängig und in Bezug auf diesen beweglich ist und ein männliches Teil (5) aufweist, das den durchbrochenen Abschnitt des Ambosses durchdringt und dessen Oberfläche wenigstens bis zur Lotrechten der Oberfläche des Ambosses reicht.

2. Vorrichtung nach Anspruch 1, dadurch gekennzeichnet, dass der Umfang des männlichen Teils im wesentlichen dem des durchbrochenen Abschnitts des Ambosses (1) entspricht, wobei dieses männliche Teil frei bleibt.

3. Vorrichtung nach einem der Ansprüche 1 bis 2, dadurch gekennzeichnet, dass die thermische Einrichtung (4) ein Behälter ist, der ein Medium enthält, das den thermischen Austausch ermöglicht.

4. Vorrichtung nach einem der Ansprüche 1 bis 3, dadurch gekennzeichnet, dass die Freigabe des Gewichts (2) von der Beweglichkeit des thermischen Mediums (4) gesteuert wird.

5. Vorrichtung nach Anspruch 4, dadurch gekennzeichnet, dass das thermische Medium (4) durch seine Beweglichkeit einen Kontakt (10) auslöst, der das Gewicht (2) freigibt.

6. Vorrichtung nach einem der Ansprüche 4 bis 5, dadurch gekennzeichnet, dass die Steuerung durch ein pneumatisches System bewirkt wird.

## Claims

1. An apparatus for measuring impact resistance consisting of an anvil (1) having an opening on the axis along which a mass (2) falls and an attemperating means (4) for bringing a test sample (6) to a given temperature, characterized in that the attemperating means, which is separate from the anvil and movable relative to the anvil, comprises a male part (5) which penetrates into the said opening in the anvil and the surface of which becomes at least flush with the surface of the anvil.

2. An apparatus according to Claim 1, characterized in that the perimeter of the male part corresponds substantially to that of the opening of the anvil (1) whilst leaving this male part free.

3. An apparatus according to any one of Claims 1 and 2, characterized in that the attemperating means (4) is a reservoir containing a heat exchange medium.

4. An apparatus according to any one of Claims 1 to 3, characterized in that the release of the mass (2) is controlled by the movement of the attemperating means (4).

5. An apparatus according to claim 4, characterized in that in its movement the attemperating means (4) triggers a contact switch (10) which releases the mass (2).

6. An apparatus accordingt to any one of Claims 4 and 5, characterized in that the control of the release is provided by a pneumatic system.

PL. UNIQUE

Fig. 1